# EUROPÄISCHE PATENTSCHRIFT

(11) **EP 4 083 467 B1**
(45) Veröffentlichungstag und Bekanntmachung des Hinweises auf die Patenterteilung: **09.07.2025**
(21) Anmeldenummer: 21171558.6
(22) Anmeldetag: 30.04.2021
(51) Int. Cl.: F16F 9/14, A47K 13/24

(54) **DÄMPFER FÜR EINE DREHBEWEGUNG, INSBESONDERE VON TOILETTENDECKELN ODER -SITZEN**
DAMPER FOR A ROTARY MOTION, IN PARTICULAR OF A TOILET LID OR SEAT
AMORTISSEUR POUR UN MOUVEMENT DE ROTATION, EN PARTICULIER DES COUVERCLES OU DES SIÈGES DE TOILETTES

(43) Veröffentlichungstag der Anmeldung: 02.11.2022
(73) Patentinhaber: Geberit International AG, 8645 Jona (CH)
(72) Erfinder: KOSARNIG, Rolf, 8630 Rüti (CH)
(74) Vertreter: Szynka Smorodin Patentanwälte Partnerschaft mbB

(56) Entgegenhaltungen:
- EP-A1- 2 587 089
- US-A1- 2017 138 433
- US-B2- 9 115 519

## Beschreibung

Die vorliegende Erfindung bezieht sich auf einen Drehdämpfer, also eine Einrichtung zur Dämpfung von Drehbewegungen um eine Drehachse. Ein solcher Dämpfer kann insbesondere eingesetzt werden zur Dämpfung der Drehbewegung von Toilettendeckeln oder Toilettensitzen, die auf einer Toilette montiert sind. Zum Beispiel kann damit ein zu heftiges Anschlagen am Ende einer Absenkbewegung vermieden werden.

Solche Dämpfer sind grundsätzlich vorbekannt und in allgemeinem Gebrauch. Sie weisen regelmäßig ein Gehäuse auf, aus dem ein zapfenartiges Teil herausragt, wobei das Gehäuse mit einem Vorrichtungsteil und der Zapfen mit einem anderen Vorrichtungsteil hinsichtlich der Drehbewegung zu koppeln sind. Eine Relativbewegung führt zu einer Verdrängung eines viskosen Dämpfungsmediums in dem Gehäuse, was mit einem die eigentliche Dämpfungswirkung erzeugenden und viskositätsbedingten Strömungswiderstand verbunden ist.

Das aus dem Gehäuse herausragende Teil wird in der folgenden Beschreibung der Erfindung als zweiter Teil eines ersten Dämpferelements bezeichnet und ist mit einem ersten Teil dieses ersten Dämpferelements fest verbunden, optional einstückig ausgeführt. Dabei wird mit dem Begriff "erster Teil" ein in dem Gehäuse angeordneter Teil bezeichnet. Die beschriebene Drehung führt zu einer Relativbewegung des ersten Dämpferelements in Bezug zu einem zweiten Dämpferelement, das seinerseits fest mit dem Gehäuse gekoppelt ist, insbesondere einstückig damit ausgeführt sein kann.

Generell ist es bekannt, mit dem ersten und zweiten Dämpferelement durch ihre Drehbewegung relativ zueinander in Umfangsrichtung (in Bezug auf die erwähnte Drehachse) Volumina für das Dämpfungsmedium zu verändern und damit das Dämpfungsmedium zu verdrängen. Außerdem ist es vorbekannt, stattdessen durch die Relativdrehung zwischen den beiden Dämpferelementen das zweite Dämpferelement axial (wieder in Bezug auf die genannte Drehachse) zu verschieben und in dieser Form Volumina für das Dämpfungsmedium zu verändern und die gewünschte Verdrängung des Dämpfungsmediums zu bewirken. In dem zweiten Fall wird die axiale Bewegung im Stand der Technik durch helixförmige Formflächen an axialen Stirnseiten des ersten und des zweiten Dämpferelements erzeugt. Zum Beispiel kann verwiesen werden auf die EP 2 587 089 der vorliegenden Anmelderin.

Das Dokument US 2017/138433 A1, welches als der nächstliegende Stand der Technik angesehen wird, offenbart die Merkmale des Oberbegriffs des Anspruchs 1.

Der vorliegenden Erfindung liegt die Aufgabe zugrunde, einen Drehdämpfer mit einem robusten und dabei nicht zu komplizierten Aufbau zu schaffen.

Hierzu richtet sich die Erfindung auf einen Dämpfer für eine Drehbewegung, insbesondere von Toilettendeckeln oder -sitzen, um eine Drehachse, mit einem Gehäuse, einem viskosen Dämpfungsmedium in dem Gehäuse, einem ersten Dämpferelement, welches einen ersten Teil in dem Gehäuse und einen mit dem ersten Teil im Rotationssinn fest verbundenen zweiten Teil außerhalb des Gehäuses aufweist und mit dem ersten und dem zweiten Teil relativ zu dem Gehäuse um die Drehachse drehbar ist, einem zweiten Dämpferelement, welches bezüglich Drehungen um die Drehachse fest mit dem Gehäuse gekoppelt und mit dem ersten Dämpferelement so gekoppelt ist, dass eine Drehung des ersten Dämpferelements relativ zu dem Gehäuse zu einer axialen Verschiebung des zweiten Dämpferelements relativ zu dem ersten Dämpferelement und einer Verdrängung des Dämpfungsmediums entlang einem Strömungsweg in dem Gehäuse durch das zweite Dämpferelement führt, dadurch gekennzeichnet, dass das zweite Dämpferelement mittels eines Gewindeeingriffs mit dem ersten Dämpferelement gekoppelt und zumindest insoweit radial in dem ersten Dämpferelement aufgenommen ist, dass der Gewindeeingriff in dem ersten Dämpferelement vorliegt, und dass der Gewindeeingriff und die dadurch bewirkte Verdrängung des Dämpfungsmediums durch das zweite Dämpferelement bidirektional wirken.

Bevorzugte Ausgestaltungen sind in den abhängigen Ansprüchen angegeben. Die Erfindung richtet sich dabei auch auf eine vorteilhafte Verwendung und auf eine mit einem erfindungsgemäßen Dämpfer ausgestattete Toilettengarnitur.

Die Erfindung geht von dem beschriebenen Stand der Technik aus und richtet sich dabei auf eine Dämpfervariante, bei der aus der Drehung der beiden Dämpferelemente relativ zueinander eine axiale Verschiebung des zweiten Dämpferelements relativ zu dem ersten erzeugt wird. Erfindungsgemäß erfolgt dies über einen Gewindeeingriff zwischen den beiden Dämpferelementen, und zwar sozusagen radial (in Bezug zu der Drehachse) zwischen diesen beiden Dämpferelementen. In anderen Worten soll das zweite Dämpferelement zumindest insoweit radial in dem ersten Dämpferelement aufgenommen sein (sodass diese also, radial betrachtet, überlappen), dass der Gewindeeingriff in diesem aufgenommenen Bereich und damit in dem ersten Dämpferelement (also im Bereich der Überlappung) vorliegt.

Es geht hier also nicht um die Wechselwirkung zwischen axial benachbarten helixförmigen Stirnflächen, sondern um einen im radialen Sinn äußeren Bereich des zweiten Dämpferelements und einen inneren Bereich des ersten Dämpferelements, die in Gewindeeingriff miteinander stehen.

In dieser Form kann eine robuste und konstruktiv nicht allzu komplizierte mechanische Lösung für die Erzeugung der Verdrängung des Dämpfungsmediums realisiert werden.

Insbesondere kann ein erfindungsgemäßer Gewindeeingriff in zwei Richtungen zu einer axialen Verschiebung führen, während es bei den vorbekannten axialen Stirnseiten und deren Helixformen jeweils nur zu Kräften in eine Richtung kommen kann. Wenn dabei eine Wechselwirkung in zwei Richtungen gewünscht ist, müssen die Strukturen gewissermaßen verdoppelt werden. Im Stand der Technik gibt es stattdessen auch Lösungen, bei denen eine zusätzliche Feder vorgesehen ist und damit gewissermaßen die Kraft in der zweiten Richtung als Vorspannung vorgibt. Demgegenüber ist die Erfindung insoweit einfacher, als der Gewindeeingriff an sich bidirektional wirkt.

Außerdem schafft eine Lösung mit axialer Verschiebung Möglichkeiten für die Realisierung des für die eigentliche Dämpfung verantwortlichen Strömungswegs des Dämpfungsmediums, die gegenüber dem grundsätzlich anderen Bautyp mit der Bewegung in Umfangsrichtung vielfältiger und in Bezug zu vielen Lösungen aus diesem anderen Gebiet auch einfacher sind.

Erfindungsgemäß ist das zweite Dämpferelement jedenfalls hinsichtlich des Gewindeeingriffs in dem ersten Dämpferelement aufgenommen, sodass also das erste Dämpferelement in diesem Bereich radial außerhalb des zweiten liegt. Da das erste Dämpferelement über den zweiten Teil außerhalb des Dämpfergehäuses verfügt (gewöhnlich ein zylindrischer Zapfen mit Abflachungen an zueinander entgegengesetzten Seiten), werden also die Kräfte über das radial äußere Teil in den Gewindeeingriff eingeleitet. Damit sind hier die Hebellängen relativ groß und ist das erste Dämpferelement im Hinblick auf die Übertragung dieser Kräfte besonders robust.

Grundsätzlich kann der Gewindeeingriff schon dadurch erfolgen, dass nur an einem der beiden Dämpferelemente ein Gewinde, also ein Satz aus mindestens zwei helixförmigen Flächen, vorgesehen ist. Bei dem anderen Dämpferelement kann dann z. B. nur ein einfacher Vorsprung (mit z. B. runder Grundfläche) oder eine Ausnehmung vorgesehen sein, wobei der Vorsprung zwischen die beiden helixförmigen Flächen des anderen Dämpfungselements bzw. die beiden helixförmigen Flächen in die Ausnehmung eingreifen können.

Bevorzugt ist allerdings, dass beide Dämpferelemente jeweils zwei helixförmige Flächen aufweisen und es insoweit einen wechselseitigen Eingriff von Gewinden ineinander gibt.

Dabei müssen allerdings die Gewindelängen auf beiden Seiten nicht die gleichen sein und kann es beispielsweise bei einem der Dämpferelemente nur einen kurzen Vorsprung mit allerdings zwei helixförmigen Flächen an seinen Seiten geben, während eine Rille als das Gegenstück des anderen Dämpfungselements in Umfangsrichtung viel länger ausgebildet ist.

Außerdem müssen die beiden helixförmigen Flächen eines Dämpferelements nicht zwingend verschieden sein, sie können also durch den Verlauf einmal um den Umfang miteinander verbunden sein. In anderen Worten bezieht sich die Zahl 2 auf die Betrachtung an einer bestimmten Umfangsstelle.

Die helixförmigen Flächen, also Gewinde, an beiden Dämpferelementen sorgen für eine Verteilung der Kräfte über größere Flächen und damit eine robustere Lösung.

Vorzugsweise ist das zweite Dämpferelement mindestens bei einem Teil der durch die axiale Verschiebung auftretenden Positionen vollständig radial in dem ersten Dämpferelement aufgenommen. Dann gilt diese Aufnahme also nicht nur für einen axialen Abschnitt des zweiten Dämpferelements. In dieser Form kann eine besonders kompakte Konstruktion erreicht werden.

Weiterhin ist bevorzugt, dass es nicht etwa zusätzlich zu dem beschriebenen Gewindeeingriff noch eine weitere Wechselwirkung zwischen helixförmigen Formflächen an axialen Stirnseiten des ersten und zweiten Dämpferelements gibt. Vorzugsweise beschränkt sich also die mechanische Wechselwirkung zwischen den beiden Dämpferelementen auf den beschriebenen Gewindeeingriff, wobei dieser natürlich mehrfach vorliegen kann.

Vorzugsweise erstrecken sich die durch die helixförmigen Flächen gebildeten Gewindeabschnitte über einen nicht zu kleinen Drehwinkel (in Bezug auf die Drehachse), und zwar vorzugsweise von mindestens 50° Grad. Damit wird eine verbesserte Stabilität und insgesamt eine robuste Ausführung des Dämpfers erreicht. Bevorzugte Untergrenzen sind ferner 60°, 70° und sogar 80°.

Diese Winkelerstreckung muss dabei nicht für die Gewindeabschnitte beider Dämpferelemente gleich sein. Beispielsweise erstrecken sich die Gewindeabschnitte des inneren zweiten Dämpferelements bei dem weiter unten beschriebenen Ausführungsbeispiel über gut 90°, aber diejenigen des äußeren ersten Dämpferelements über deutlich mehr als 200°, weil sie die Gesamtdrehbewegung des Dämpfers abdecken und zusätzlich in allen Positionen mit den inneren Gewindeabschnitten vollständig oder jedenfalls weitgehend überlappen sollen. Das bedeutet im Fall des Ausführungsbeispiels einen Gesamtdrehwinkel von 120° zuzüglich gut 90° für das zweite Dämpferelement und damit gut 210°. In diesem Sinn beziehen sich die obigen Mindestangaben auf die jeweilig kürzeren Gewindeabschnitte der Dämpferelemente.

Vorzugsweise ist außerdem ein drehbares Einstellelement vorgesehen, das eine durch die Drehung des Einstellelements verfahrbare Einstellöffnung aufweist. Dabei müssen der die Öffnung aufweisende Teil und das übrige Einstellelement nicht zwingend einstückig ausgestaltet sein, aber hinsichtlich der Drehbewegung gekoppelt sein. Die Einstellöffnung ist in dem Strömungsweg angeordnet und kann durch ihre Verfahrbewegung einen Strömungsquerschnitt verändern. Dazu überlappt die Einstellöffnung mit einer Abdeckkante. Die Abdeckkante, überdeckt also einstellungsabhängig einen unterschiedlich großen Anteil der Einstellöffnung und durch die Drehung wird dieser Anteil, also das Ausmaß der Überlappung, verstellt.

Zum Beispiel kann die Abdeckkante eine Begrenzungskante (oder die Kombination einer Mehrzahl Begrenzungskanten) einer weiteren Öffnung in dem Strömungsweg sein, die unmittelbar zu der Einstellöffnung benachbart ist.

Die Drehbarkeit kann dabei relativ zu dem einen Dämpferelement oder dem anderen Dämpferelement vorgesehen sein; entscheidend ist nur, dass sich die Drehbarkeit auf die Veränderung der beschriebenen Überlappung auswirkt.

Im Stand der Technik sind stattdessen Lösungen bekannt, bei denen ein drehbares Einstellelement bei seiner Drehung eine axiale Verschiebung erfährt, indem es nämlich in einem Gewinde geführt ist und wie eine Schraube verstellt wird. Dadurch wirkt sich statt der beschriebenen Einstellöffnung eine axiale Verschiebung einer Stirnfläche des Einstellelements auf einen Strömungsquerschnitt aus.

Vorteilhafterweise kann die Einstellöffnung radial von der Drehachse des Einstellelements, die in meisten Fällen mit der Drehachse des Dämpfers übereinstimmt, beabstandet werden, wodurch sich ein größerer Gestaltungsspielraum ergibt.

Ferner kann eine axiale Bewegung des Einstellelements vermieden werden, weil sie für die Einstellung nicht erforderlich ist (wenngleich sie im allgemeinsten Sinn der Erfindung möglich ist). Dann ist also die Drehung eine reine Drehung ohne axiale Komponente, also keine Schraubenbewegung. Dementsprechend verändert sich das Einstellelement auch von außen gesehen hinsichtlich seiner axialen Position nicht und bleibt z. B. hinsichtlich der Bedienung axial an der gleichen Stelle. Es tritt z. B. nicht weiter in ein Bauteil des Dämpfers, in dem es aufgenommen ist, hinein oder aus diesem heraus. Außerdem können bei einer Fehlbedienung das Herausfallen des Einstellelements und damit Undichtwerden des Dämpfers vermieden werden, wie es bei gewindegeführten Einstellelementen nach dem Stand der Technik möglich ist.

Gemäß einer bevorzugten Ausgestaltung kann die Einstellöffnung in einem Umkehrbereich des Strömungswegs angeordnet werden. Dieser Strömungsweg verbindet dabei zwei Volumina, von denen eines durch die Relativbewegung bzw. Verschiebung verkleinert und das andere vergrößert wird, wobei bei dieser Ausgestaltung der Strömungsweg einen zentrischen axialen Teil aufweist. Die Einstellöffnung liegt dann zwischen diesem axialen Teil des Strömungswegs und einem der beiden Volumina, welches radial weiter außen liegt. Das Dämpfungsmedium kann also über den axialen Teil der Einstellöffnung zugeführt werden (oder umgekehrt). Die beiden Volumina liegen vorzugsweise in axialer Hinsicht beidseits des verschobenen zweiten Dämpferelements und dementsprechend liegt eines der beiden näher an der Einstellöffnung und wird über diese mit dem axialen Strömungswegteil verbunden. Zur Veranschaulichung wird auf das Ausführungsbeispiel verwiesen.

Bei dieser Ausgestaltung erlaubt die radial aus der Achse versetzte Position der Einstellöffnung eine Nutzung der Achsposition für den axialen Teil des Strömungswegs.

In dem Strömungsweg des Dämpfungsmediums kann vorteilhafterweise ferner ein Ventilelement vorgesehen sein, um die Funktion des Dämpfers richtungsabhängig zu verändern. Dieses Ventilelement kann strömungsrichtungsabhängig bewegt werden und eine Bypassöffnung in den Strömungsweg schalten oder sperren. Die Bypassöffnung verringert den Strömungswiderstand des Strömungswegs insgesamt deutlich und verringert damit den Dämpfungsgrad. Zum Beispiel kann es gewünscht sein, einen Toilettensitz oder -deckel gegen einen relativ geringen Dämpfungswiderstand anheben zu können bei gleichzeitiger Gewährleistung einer ausreichenden Dämpfung der Absenkbewegung.

Wenn die Bypassöffnung in der einen Strömungsrichtung nicht vollständig verschlossen, sondern lediglich deutlich verengt wird, führt dies zu analogen technischen Konsequenzen und ist daher inbegriffen.

Umgekehrt muss das Ventilelement in der anderen Strömungsrichtung nicht zwingend in eine genau definierte andere Position bewegt werden. Insbesondere ist ein Elastomer-Ventilelement bevorzugt, bei dem das strömende Dämpfungsmedium einen Teil des Ventilelements oder das Ventilelement insgesamt gegen eine Rückstellkraft des Elastomermaterials bewegt, sodass abhängig von der Strömungsgeschwindigkeit eine unterschiedlich starke Auslenkung des Ventilelements auftreten kann. Es geht vor allem darum, strömungsrichtungsabhängig den Strömungswiderstand an der entsprechenden Stelle deutlich zu verändern bzw. in der Sperrrichtung den Durchfluss des Dämpfungsmediums auch ganz zu unterbinden.

In einer besonders einfachen Ausgestaltung ist das Ventilelement ein Einwegeventil, dass sich strömungsrichtungsabhängig öffnet oder schließt und in dem durch die Bypassöffnung führenden Anteil des Strömungswegs vorgesehen ist.

Vorteilhafterweise ist die Bypassöffnung im offenen Zustand parallel geschaltet zu der Einstellöffnung des Einstellelements. Im offenen Zustand der Bypassöffnung bzw. des durch diese führenden Anteils des Strömungswegs ist die Einstellöffnung damit weitgehend außer Funktion gesetzt, sodass die Einstellung über das Einstellelement in diesem Sinn die stärker gedämpfte Drehrichtung des Dämpfers betrifft.

Bei einer weiteren bevorzugten Ausgestaltung folgt der bereits beschriebenen Einstellöffnung eine Vorratskammer für Dämpfungsmedium nach. Mit "Nachfolgen" ist hier gemeint, dass die Vorratskammer unmittelbar an die Einstellöffnung anschließt bzw. dazwischen keine hinsichtlich des Strömungswiderstands des Dämpfungsmediums relevante Verengung existiert. Ferner nimmt dies auf diejenige Strömungsrichtung Bezug, in der die durch die Einstellöffnung einstellbare Dämpfungswirkung erfolgt (und nicht die z. B. durch die zuvor diskutierte Bypassöffnung mit einem deutlich geringeren Strömungswiderstand versehene Richtung).

Diese Vorratskammer hat die Funktion, eine gewisse Menge des Dämpfungsmediums zu bevorraten, sodass durch die Einstellöffnung in deren Dämpffunktion hindurch gezwängtes Dämpfungsmedium mit in der Vorratskammer bevorratetem Dämpfungsmedium zusammentrifft. Typischerweise zeigt nämlich das Dämpfungsmedium die Eigenschaft, nach dem durch ein entsprechendes Druckgefälle erzwungenen Durchtritt durch enge Stellen, insbesondere die Einstellöffnung, vorübergehend eine niedrigere Viskosität zu haben als zuvor. Dann könnte bei einer Bewegung über eine gewisse Strecke, insbesondere einer durch eine größere Kraft beaufschlagten Bewegung, stromabwärts von der Einstellöffnung der Strömungswiderstand dortiger Teile des Strömungswegs absinken. Die beschriebene Vorratskammer wirkt dem dadurch entgegen, dass das durch die Einstellungsöffnung hindurchgetretene Dämpfungsmedium mit anderem Dämpfungsmedium vermischt wird.

Insbesondere kann die Vorratskammer eine z. B. trichterartige Verbreiterung eines ungefähr radial verlaufenden Kanals im Strömungsweg sein, wie das Ausführungsbeispiel zeigt.

Die Einstellöffnung selbst kann an einer an diesen Kanal, insbesondere dessen Verbreiterung, anschließenden Vertiefung in einer Außenfläche desjenigen Dämpferbauteils vorliegen, das den Kanal enthält (oder auch eines unmittelbar benachbarten Bauteils). Vorzugsweise handelt es sich um eine Vertiefung einer zylindrischen Außenfläche eines Dämpferbauteils. Das Ausführungsbeispiel veranschaulicht auch dies. Eine solche Vertiefung lässt sich gut in kleinen Dimensionen herstellen und hat den Vorteil, dass sich durch Nachbearbeitung z. B. eines Spritzgusswerkzeugs oder Austauschen eines kleinen Teils eines mehrteiligen Spritzgusswerkzeugs die Maße einer solchen Vertiefung nach einer Erprobung oder zur Anpassung an eine neue Einsatzsituation geringfügig verändern lassen. Damit kann produktionsseitig zusätzlich zu der erfindungsgemäßen Einstellmöglichkeit eine Anpassung der Dämpfungseigenschaften (jedenfalls in der hier relevanten Richtung) vorgenommen werden.

Bei einer weiteren Ausgestaltung dieser Vertiefung hat diese eine sich mindestens in einer Richtung verjüngende Form, und zwar von dem Kanal ausgehend schmaler werdend. Die Richtung, in der der Begriff "schmal" gilt, ist dabei senkrecht zu der Richtung der Relativbewegung der Dämpferelemente (und natürlich senkrecht zur radialen Richtung). Von dem Kanal ausgehend in Richtung der Relativbewegung nimmt die Schmalheit zu. Vorzugsweise wird die Vertiefung dabei außerdem flacher (dies bezogen auf die radiale Richtung).

Die Überlappung mit der Abdeckkante nimmt (bei Drehung des Einstellelements) in der Relativbewegungsrichtung der Dämpferelemente zu, sodass also durch die zunehmende Überlappung nurmehr schmalere und flachere Teile der Vertiefung frei bleiben. Dementsprechend wird durch die Form der Vertiefung bedingt trotz vorzugsweise gleichmäßiger Steigung der Helixform der Abdeckkante gewissermaßen ein nichtlineares Ansprechen der Einstellmöglichkeit erzielt. Insbesondere lässt sich das Ansprechverhalten in dem zuvor beschriebenen Sinn durch eine Veränderung der Vertiefung auch noch anpassen.

Eine weitere oder alternative bevorzugte Steuerungsmöglichkeit des erfindungsgemäßen Dämpfers ist nicht richtungsabhängig, sondern drehwinkelabhängig, betrifft also einen Teil des Gesamtdrehwegs des Dämpfers. In einem Endbereich dieses Gesamtdrehwegs soll die Dämpfungswirkung dementsprechend verstärkt werden, und zwar indem eine weitere Öffnung in dem Strömungsweg verengt wird und damit zu der Dämpfungswirkung der Einstellöffnung als weiterer maßgeblicher Strömungswiderstand hinzutritt.

Dies wird vorteilhafterweise dadurch realisiert, dass das zweite Dämpferelement im Rahmen seiner axialen Verschiebebewegung in einem Endbereich dieser Bewegung eine Durchtrittsöffnung des Dämpfungsmediums durch zunehmende Überlappung verengt oder möglicherweise auch ganz verschließt. In letztgenanntem Fall könnte dies das Dämpfungsmedium durch einen parallel geschalteten Strömungsweganteil mit entsprechend hohem Strömungswiderstand zwingen.

Jedenfalls kann in solcher Weise z. B. dafür gesorgt werden, dass bei einer an sich eher dämpfungsarmen oder dämpfungsfreien Anhebebewegung eines Toilettendeckels oder -sitzes in der Schlussphase kurz vor dem Anschlagen eine verstärkte oder zunehmende Dämpfung erfolgt. In diesem Fall würde also diese zweite Steuerungsmöglichkeit zu der richtungsabhängigen und zuvor beschriebenen hinzutreten.

Die gerade erläuterte Durchtrittsöffnung kann sich bei einer vorteilhaften Ausgestaltung an den bereits zuvor erwähnten axialen Teil des Strömungswegs des Dämpfungsmediums anschließen. Sie liegt damit in Bezug auf diesen axialen Teil des Strömungswegs gewissermaßen entgegengesetzt zu der Einstellöffnung (ist dabei aber durchaus nicht symmetrisch zu dieser). Das Ausführungsbeispiel veranschaulicht diesen Aspekt.

Es könnte z. B. die Endphase einer Schließbewegung stärker gedämpft werden, um einerseits ein besonders sanftes Anschlagen in der Endposition der Schließbewegung zu erreichen, andererseits die Schließbewegung an sich damit nicht allzu sehr zu verlangsamen. Dementsprechend gibt es dann eine entsprechende Durchtrittsöffnung (im Ausführungsbeispiel zwei) im anderen Endbereich der Bewegung des zweiten Dämpferelements. Diese Durchtrittsöffnung verringert also die Dämpfung in der Anfangsphase der Schließbewegung ganz erheblich, wird dann aber in der Endphase geschlossen, sodass die eigentliche Dämpfung durch die Einstellöffnung zum Tragen kommt. Die obige Grundidee einer Durchtrittsöffnung, die in einer Endphase einer Bewegung des zweiten Dämpferelements von diesem abgedeckt wird, lässt sich dementsprechend auch doppelt ausführen.

Die zuvor beschriebene Einstellmöglichkeit mit dem drehbaren Einstellelement ist baulich besonders flexibel, sie kann zudem sehr sensibel realisiert werden (insbesondere durch die erwähnte helixförmige Gestalt der Abdeckkante). Bei einer bevorzugten Nutzung dieses Aspekts der Erfindung wird eine gewisse Zahl vorzugsweise baugleiche Dämpfer unter Nutzung der Einstellmöglichkeit an individuelle Situation angepasst. Insbesondere betrifft dies unterschiedliche Massen von Toilettensitzen oder -deckeln (oder sonstwie in ihrer Bewegung gedämpften Teilen). Es kann also mit einem oder einer kleinen Zahl Bautypen des Dämpfers eine größere Zahl unterschiedlicher solcher Massen sinnvoll abgedeckt werden, indem die Einstellmöglichkeit zur Individualisierung genutzt wird.

Im Besonderen betrifft dies eine Mehrzahl baugleicher Dämpfer mit gleichem Dämpfungsmedium, z. B. gleichem Fetttyp. Konventionellerweise wird nämlich zwischen unterschiedlichen Dämpfungsmedien unterschieden, um auf unterschiedliche Massen der zu dämpfenden Teile Rücksicht zu nehmen. Es ist aber viel einfacher, eine kleine Zahl Dämpfertypen oder auch nur einen einzigen Dämpfertyp mit einer kleinen Zahl unterschiedlicher Dämpfungsmedien-Typen oder sogar nur einem einzigen Typ Dämpfungsmedium zu befüllen und nur die Einstellmöglichkeit zur Anpassung zu nutzen.

Die Erfindung richtet sich schließlich auch auf eine Toilettengarnitur mit zumindest einem erfindungsgemäßen Dämpfer. Eine Toilettengarnitur bezeichnet dabei mindestens einen Toilettendeckel oder einen Toilettensitz, vorzugsweise beide in Kombination, zur Montage (oder montiert) auf einer Toilette. Dabei findet ein erfindungsgemäßer Dämpfer Einsatz zum Abdämpfen der Drehbewegungen der Garniturteile, wobei vorzugsweise für den Toilettensitz und den Toilettendeckel je ein Dämpfer vorgesehen ist.

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt:
- Figur 1: eine perspektivische Ansicht einer mit einer erfindungsgemäßen Toilettengarnitur ausgestatteten Toilette, wobei ein Toilettendeckel in vertikaler und zusätzlich halb abgesenkter Position dargestellt ist;
- Figur 2: eine explosionsartige Darstellung eines erfindungsgemäßen Dämpfers in der Toilettengarnitur aus Figur 1, wobei die Einzelteile entlang der Drehachse auseinandergezogen sind;
- Figur 3: eine entlang der Drehachse geschnittene und gleichzeitig perspektivische Ansicht des wesentlichen Teils des Drehdämpfers aus Figur 2;
- Figur 4: einen Ausschnitt aus der Darstellung in Figur 3 vergrößert;
- Figur 5: eine Figur 3 entsprechende Darstellung, jedoch in Seitenansicht senkrecht zur Schnittebene und zur Drehachse;
- Figuren 6, 7 und 8: Ansichten analog zu Figur 5, jedoch mit veränderten Positionen der Bauteile;
- Figur 9: eine Darstellung analog zu Figur 3, aber mit den Bauteilpositionen gemäß Figur 8;
- Figur 10: eine vergrößerte Darstellung des Einstellelements 12 aus Figur 2 mit etwas veränderter Drehposition gegenüber Figur 2 und
- Figur 11: eine ebenfalls vergrößerte Darstellung des Achsteils 7 aus Figur 2.

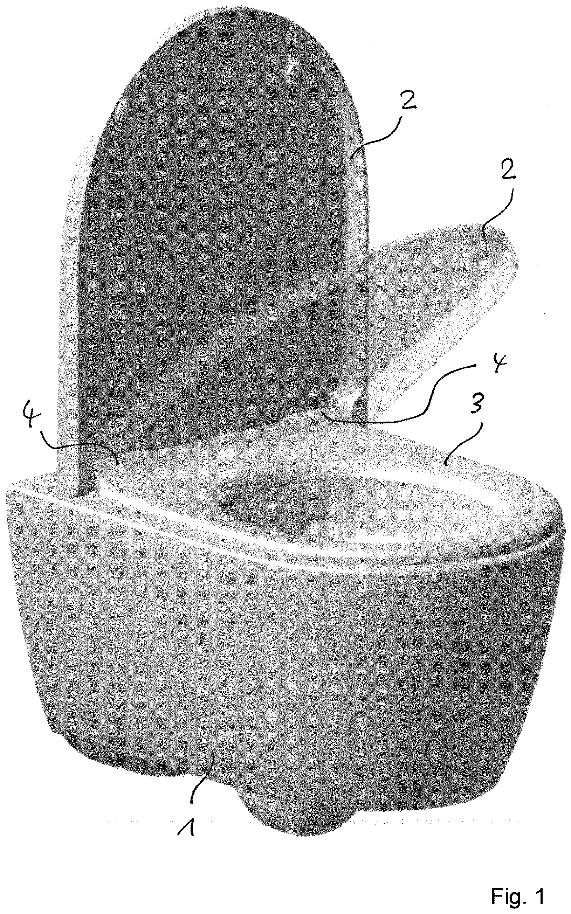

Figur 1 zeigt eine perspektivische Darstellung einer Toilette von vorn links oben. Dabei ist auf einen Toilettenkörper 1 eine Toilettengarnitur montiert, die einen Toilettendeckel 2 und einen Toilettensitz 3 aufweist, die jeweils um eine hinten querliegende Drehachse auf- und zuklappbar sind. Zur Veranschaulichung ist der Toilettendeckel 2 neben der aufrechten Position noch einmal in halb abgesenkter Lage und dabei halbtransparent angedeutet.

Die Toilettengarnitur ist in leicht verdickt erscheinenden Bereichen 4 des Toilettensitzes 3 mit zwei erfindungsgemäßen Dämpfern ausgestattet, auf die anhand der folgenden Figuren näher eingegangen wird und die zum Dämpfen der Drehbewegung des Toilettendeckels 2 und des Toilettensitzes 3 dienen. Dabei ist durch entsprechende drehbare bzw. drehverriegelte Führung/Verbindung dafür Sorge getragen, dass der eine Drehdämpfer nur die Drehbewegung des Toilettendeckels 2 dämpft und gegenüber dem Toilettensitz 3 drehbeweglich ist und der andere Drehdämpfer umgekehrt.

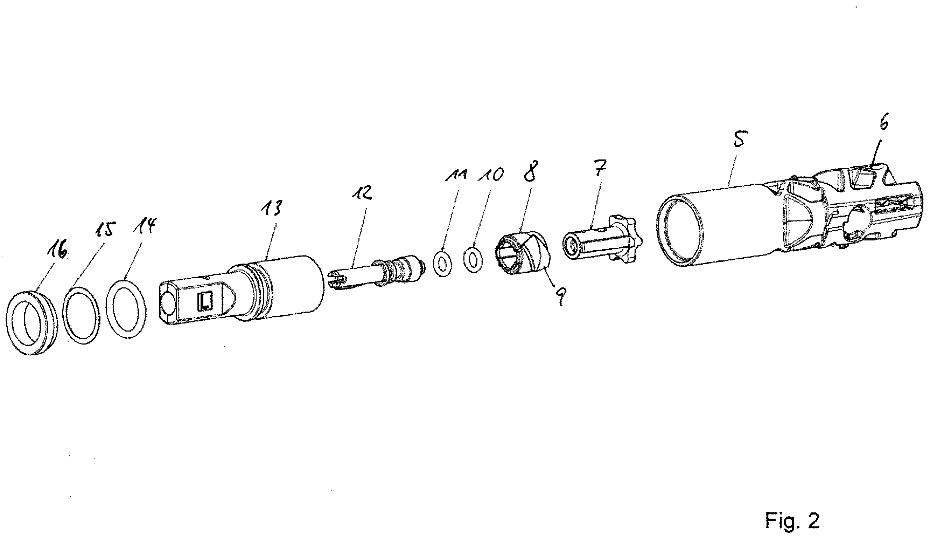

In Figur 2 sieht man einen der Dämpfer mit einer Reihe einzelner Bauteile entlang der Drehachse, wobei hier auf die linke der beiden Positionen 4 in Figur 1 abgestellt wird. Ganz rechts ist ein Gehäuse 5 des Dämpfers zu sehen, das zur linken Seite offen ist und darin einen im Wesentlichen zylindrischen Hohlraum zur Aufnahme der übrigen Teile bietet.

Der ebenfalls dargestellte rechte Teil des Dämpfergehäuses 5 dient zur Befestigung auf einem vertikalen Montagedorn, der auf dem Toilettenkörper 1 aus Figur 1 in an sich konventioneller Weise befestigt ist und das in Figur 2 mit 6 bezeichnete vertikale Loch durchsetzt. Im Übrigen wird zur Illustration verwiesen auf die frühere Anmeldung EP 20 152 653.0 der vorliegenden Anmelderin, was die Details dieser Befestigung angeht. Diese sind für die vorliegende Erfindung nicht wesentlich.

In der Reihenfolge von rechts nach links sieht man im Übrigen ein Achsteil 7, dessen rechtes Ende eine sternähnliche Scheibe mit abgerundeten Spitzen zu einer drehverriegelten formschlüssigen Montage in einer entsprechenden Ausnehmung in der nicht sichtbaren stirnseitigen Endfläche des Hohlraums in dem Gehäuse 5 aufweist. Außerdem hat das Achsteil 7 zwei drehachsenparallele äußere Längsrippen, von denen eine dargestellt ist und die zum formschlüssigen Eingriff (hinsichtlich Drehung) in entsprechende Rillen des links daneben dargestellten Elements 8 dienen. Dieses ist das sogenannte zweite Dämpfungselement 8 und hat ausweislich der Figur einen äußeren Gewindeabschnitt 9, ein weiterer ist in Figur 2 nicht zu sehen und liegt hinter dem Element 8.

Weiter links gibt es zwei Elastomer-O-Ringe 10 und 11, auf die noch näher eingegangen wird, sowie ein hülsenstiftartiges Einstellelement 12.

Darauf folgt das sogenannte erste Dämpferelement 13, das gemäß Figur 2 einen rechten zylindrischen ersten Teil zur Aufnahme in dem Gehäuse 5 und einen linken zweiten Teil aufweist, die einstückig miteinander ausgeführt sind. Der zweite Teil des ersten Dämpferelements dient zur Drehmomentübertragung auf das von dem Dämpfer gedämpfte Garniturteil 2 oder 3, wozu die beiden seitlichen Abflachungen dienen. Insoweit ist der Dämpfer ähnlich zu konventionellen Dämpfern aufgebaut.

Noch weiter links erkennt man eine Dichtung 14, eine weitere Scheibe 15 und einen Verschlussdeckel 16.

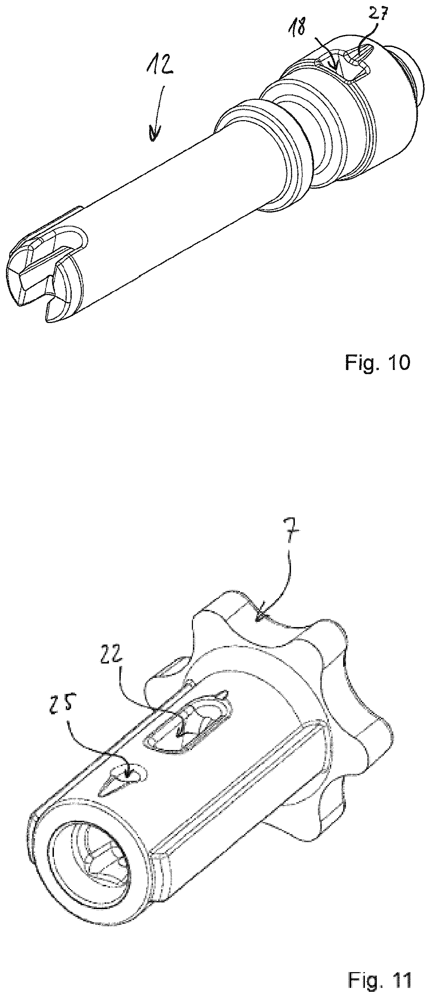

Die Teile 12 und 7 zeigen die Figuren 10 und 11 einzeln und vergrößert.

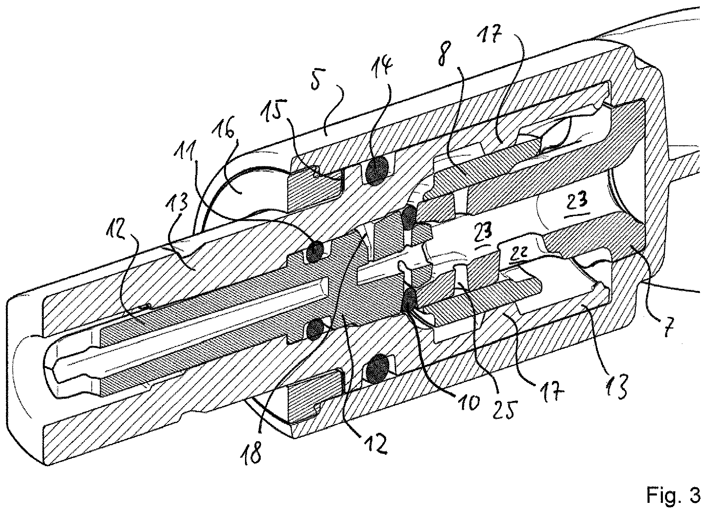

In den Figuren 3 und 4-9 sind diese Elemente in zusammengebautem Zustand dargestellt, wobei nur der rechte Teil des Dämpfergehäuses 5 weggelassen ist.

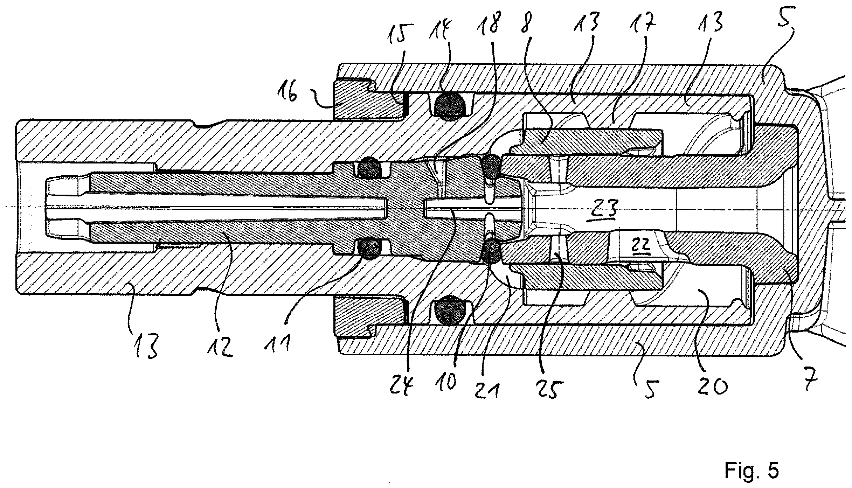

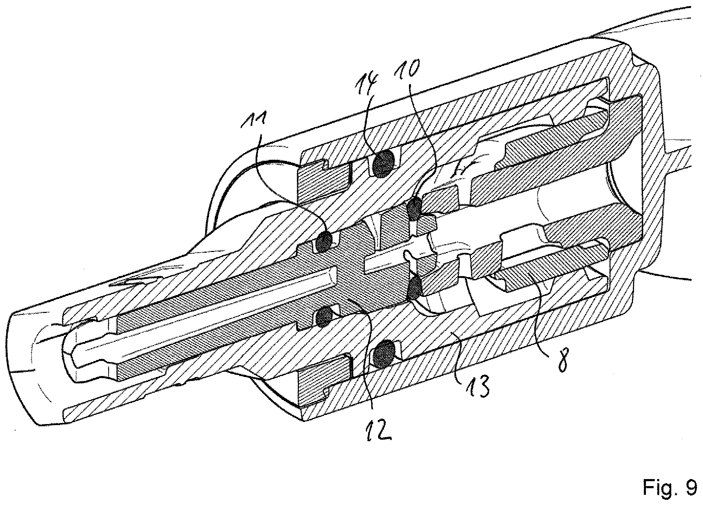

Dabei sind die Figuren 3 und 9 einerseits in einer die Drehachse enthaltenden und in Bezug auf Figur 2 vertikalen Ebene geschnitten, andererseits perspektivisch und damit vergleichbar mit Figur 2. Die Figuren 5-8 sind in der gleichen Schnittebene geschnitten, aber in senkrechter Draufsicht auf die Schnittebene dargestellt, wobei diese Figuren 5-8 im Vergleich miteinander verschiedene Positionen einerseits des ersten Dämpfungselements 13 und des zweiten Dämpferelements 8 und andererseits des Einstellelements 12 zeigen. Hinsichtlich dieser Positionen entsprechen sich die Figuren 3 und 5 einerseits sowie 8 und 9 andererseits.

Zunächst wird das Wechselspiel zwischen dem ersten Dämpferelement 13, dem zweiten Dämpferelement 8 und dem Achsteil 7 erläutert. In den Figuren ist das Gehäuse 5 hinsichtlich der Drehung stationär (so wie auch auf dem Toilettenkörper 1), was wegen der bereits beschriebenen Drehverriegelung durch den Formschlusseingriff auch für das Achsteil 7 gilt. Wegen des ebenfalls bereits beschriebenen Eingriffs von dessen Rippen in die Rillen des zweiten Dämpferelements 8 ist auch das zweite Dämpferelement 8 hinsichtlich der Drehung stationär und lediglich axial verschiebbar. Drehbar wiederum ist das erste Dämpferelement 13.

Der äußere Gewindeabschnitt 9 des zweiten Dämpferelements 8 greift ein in ein Innengewinde in dem ersten Dämpferelement 13, und zwar in dessen ersten Teil. Der entsprechend nach innen vorstehende Gewindeabschnitt ist in den Figuren mit 17 bezeichnet, wobei wegen der Schnittebene der Gewindeabschnitt 9 aus Figur 2 in den Figuren 3 bis 9 nicht zu erkennen ist (er liegt nämlich hinter bzw. vor der Schnittebene). Durch diese Wechselwirkung wird eine Drehbewegung des ersten Dämpferelements 13 in eine axiale Schiebebewegung des zweiten Dämpferelements 8 übersetzt, was sich aus dem Vergleich der Figuren 5-8 (bzw. 3 und 9) ablesen lässt. In der Reihenfolge der Figurennummern handelt sich um eine Anhebebewegung eines Garniturteils, wobei sich das zweite Dämpferelement 8 von links nach rechts bewegt und ein in den Figuren gut erkennbares Volumen 20 axial rechts davon verkleinert und ein anderes Volumen 21 axial links davon vergrößert. In an sich bekannter Weise sind diese Hohlräume mit einem Dämpfungsmedium (einem Spezialfett) hoher Viskosität gefüllt, das dementsprechend aus dem rechten Hohlraum verdrängt wird und über einen Strömungsweg zu dem linken Hohlraum gezwängt wird.

Dabei ist das zweite Dämpferelement 8 gemäß den Figuren vollständig radial innerhalb des ersten Dämpferelements 13, und zwar innerhalb von dessen erstem Teil, aufgenommen. Man erkennt außerdem, dass die Drehmomenteinleitung von dem zweiten Teil des ersten Dämpferelements 13 (in den Figuren links) zu dem ersten Teil (in den Figuren rechts) und von diesem ersten Teil des ersten Dämpferelements 13 zu dem zweiten Dämpferelement 8 (also radial nach innen) bei jeweils relativ großen Radien stattfindet, also unter Berücksichtigung der Hebelwirkung mit begrenzten Kräften bzw. stabilen Strukturen.

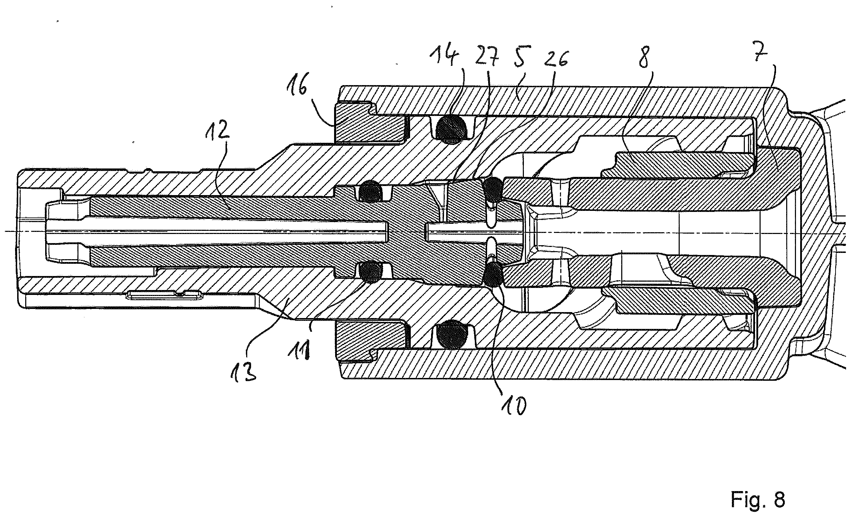

Man erkennt außerdem, z. B. in den Figuren 3 und 5, dass das erste Dämpferelement mit seinem Innengewinde z. B. in Figur 5 auch noch einmal rechts unten in dem ersten Dämpferelement zu sehen ist oder in Figur 8 noch einmal links oben, und daher das äußere Gewindeelement 9 des zweiten Dämpferelements 8 beidseits mit entsprechenden Helixflächen umgreift. Insoweit ist der Gewindeeingriff bidirektional.

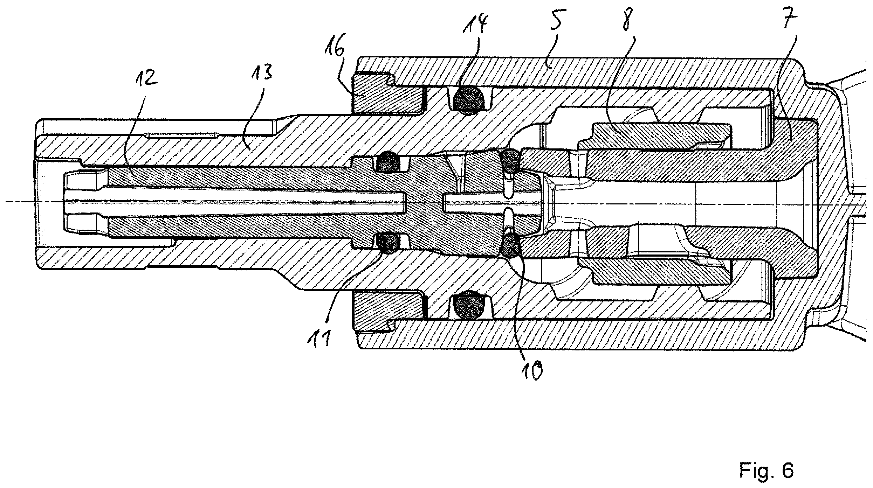

Bei der in den Figuren dargestellten Bewegung wird zunächst, also in dem Stadium von Figur 5 zu Figur 6, das Dämpfungsmedium von dem rechten Volumen 20 ausgehend durch die mit 22 bezeichnete radiale Durchtrittsöffnung in einen zentrischen und axialen Teil 23 des Strömungswegs, nämlich mittig in dem Achsteil 7, gepresst. Von dort fließt es axial weiter nach links und dann einerseits in einen zentralen Kanalabschnitt 24 am rechten Ende des Einstellelements 12 und von dieser nach etwa einem Drittel von deren Länge radial nach außen in Richtung zu dem Elastomer-O-Ring 10.

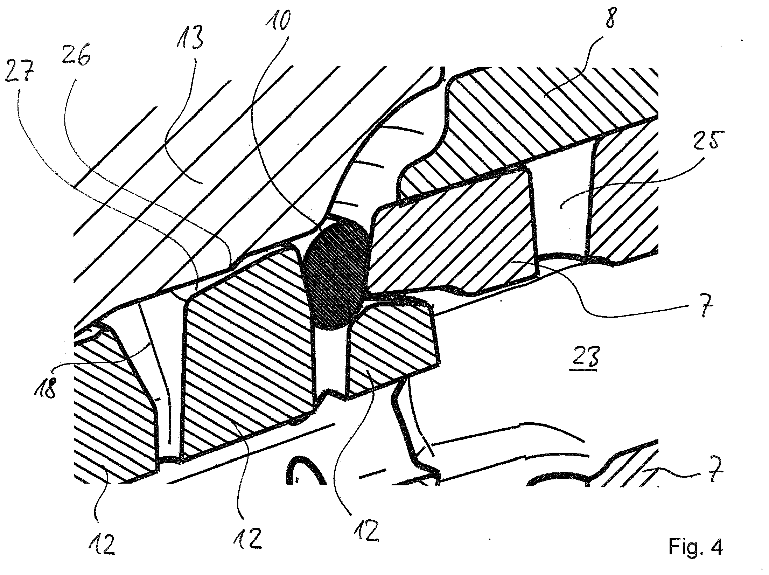

Dessen Lage ist in Figur 4 vergrößert als Ausschnitt dargestellt, wobei die Figuren eine entgegen dem hier beschriebenen Betriebszustand geschlossene Position zeigen. Der O-Ring 10 ist nämlich ein Ventilelement ähnlich einem Einwegeventil und kann durch die gerade beschriebene Strömung radial nach außen etwas verformt werden. Er sitzt in einer etwa V-förmigen Aufnahme und ist weich genug, sodass das Dämpfungsmedium ihn nach außen anheben und sich damit einen ausreichenden Strömungsquerschnitt verschaffen kann.

Ergänzend hinzu kommt ein weiterer Durchtritt für das Strömungsmedium zwischen dem rechten Ende des Einstellelements 12 und dem Innenrand des linken Endes des Achsteils 7, der ebenfalls zu dem Ventilelement bzw. O-Ring 10 führt und in gleicher Weise durch ein Verformen dieses Ventilelements 10 strömungstechnisch verbunden wird mit dem Volumen 21 radial weiter außen. Dabei handelt sich um das Volumen 21 links von dem zweiten Dämpferelement 8.

Der ebenfalls noch existierende Weg durch ein längeres Stück des Kanalabschnitts 24 hindurch nach links und dann radial nach oben spielt bei dieser Bewegungsrichtung keine wesentliche Rolle, weil die Strömungsquerschnitte dort zu klein sind, und wird weiter unten noch näher beschrieben. Bei der umgekehrten Bewegungsrichtung verschließt nämlich das Ventilelement 10 den gerade erläuterten Weg nach radial außen, weil es in die in den Figuren dargestellte Lage bzw., je nach Druck, auch noch weiter nach innen gepresst wird. Insoweit sitzt also das Ventilelement 10 in einer zuvor in der Beschreibung sogenannten Bypassöffnung.

Bei dieser Gelegenheit sei kurz angemerkt, dass die beiden weiteren O- bzw. Dichtungsringe 11 und 14 an sich konventionellen Dichtungsaufgaben dienen, nämlich einerseits zwischen dem ersten Dämpferelement 13 und dem Gehäuse 5 und andererseits zwischen ersterem und dem Einstellelement 12, vergleiche die Figuren.

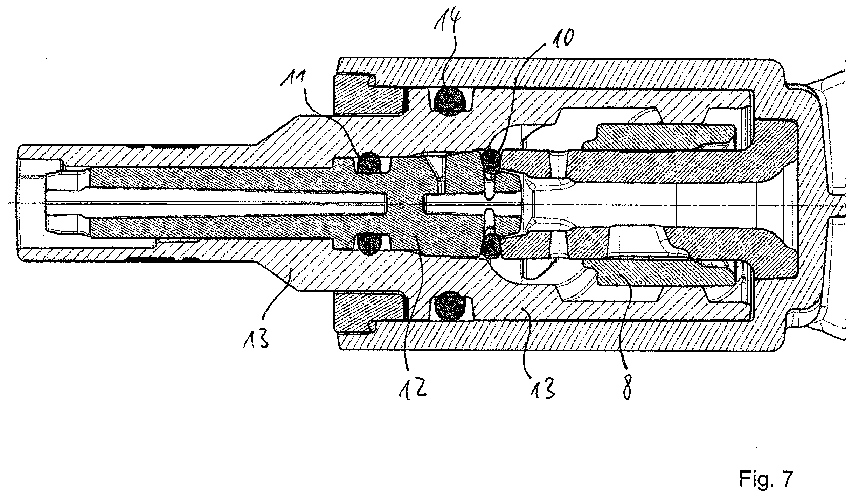

Der Vergleich der Figuren 5-7 zeigt, dass sich das zweite Dämpferelement 8 zunehmend über die Durchtrittsöffnung 22 schiebt und der verfügbare Strömungsquerschnitt für das Dämpfungsmedium von Figur 5 zu Figur 6 bereits erheblich eingeschränkt worden ist und von Figur 6 zu Figur 7 noch stärker eingeschränkt wird. In dem Zustand gemäß Figur 8 ist der Strömungsquerschnitt am kleinsten, wobei hier auch das Ende der Drehbewegungsstrecke erreicht ist.

Dieser Zusammenhang führt dazu, dass die Bewegung des Garniturteils 2 oder 3 in ihrer Schlussphase zunehmend gedämpft wird. Der Benutzer kann also den Toilettensitz 3 oder den Toilettendeckel 2 ohne großen Widerstand aus der horizontalen Position nach hinten kippen und am Ende loslassen, wobei dieser dann gebremst wird, um das Anschlagen möglichst sanft zu gestalten.

In diesem Zusammenhang wird auch auf Figur 11 und die weiter unten folgende kurze Erläuterung dazu verwiesen, gemäß der sich an die Öffnung 22 nach rechts eine kleine Vertiefung anschließt, die in Figur 5-8 nicht gut zu erkennen ist.

Im vorliegenden Fall beträgt übrigens die maximale Gesamterstreckung der Drehbewegung in dem Dämpfer etwa 120°. Diese setzen sich zusammen aus 90° für die Bewegung aus der Horizontalen in die Vertikale, weitere typische 10° für eine Überkippung des Garniturteils nach hinten in eine stabile Lage (z. B. Anlage gegen die Wand bzw. des Sitzes gegen den Deckel) zuzüglich an beiden Enden 10° Puffer.

Der umgekehrte Weg kann anhand derselben Figuren erläutert werden, nur in absteigender Reihenfolge ihrer Nummerierung. Die Bewegung des zweiten Dämpferelements 8 verdrängt nun Dämpfungsmedium in dem Volumen 21 und zwängt dieses über einen Strömungsweg in Richtung zu dem Volumen 20. Nach einiger Strecke der Drehbewegung werden dabei gemäß Figur 6 die Durchtrittsöffnungen 25 zunehmend von dem zweiten Dämpfungselement 8 abgedeckt und schließlich gemäß Figur 5 gesperrt.

Wie bereits erwähnt, sperrt dabei der durch das Dämpfungsmedium nach innen gedrückte Elastomer-O-Ring 10 als Ventilelement auch die Bypassöffnung, sodass das Dämpfungsmedium daran vorbei axial weiter nach links fließen muss, wobei der obere Bereich der Schnittdarstellungen zu beachten ist.

Hier gibt es einen über einen gewissen Drehwinkel erstreckten Raum infolge einer kleinen Kante 26 an der im Übrigen zylindrischen Innenfläche des ersten Dämpferelements. Gemäß den Figuren 8 und 9 befindet sich dieser Raum hinsichtlich der axialen Richtung praktisch vollständig über einer kleinen und nach links in ihrer Tiefe zunehmenden Vertiefung 27 in der Außenfläche des rechtesten Bereichs des Einstellelements 12. Durch diesen Spalt wird das Dämpfungsmedium in eine trichterartige Verbreiterung 28 in dem Einstellelement 12 gedrückt, von der aus das Dämpfungsmedium radial nach innen in den bereits früher beschriebenen Kanalabschnitt 24 fließt.

Von diesem Kanalabschnitt 24 aus strömt das Dämpfungsmedium dann in den axialen Teil 23 des Strömungswegs innerhalb des Achsteils 7. Aus dem zentralen Strömungswegteil 23 in dem Achsteil 7 kann das Strömungsmedium mit umgekehrter Strömungsrichtung, aber im Übrigen wie zuvor beschrieben zwischen dem zweiten Dämpferelement 8 und dem Achsteil 7 hindurchtreten, nachdem es die Durchtrittsöffnung 22 passiert hat, wobei die entsprechende Dämpfung dort mit der Bewegung des zweiten Dämpferelements 8 nach links immer schwächer wird.

Diese Bewegungsrichtung entspricht einer Absenkbewegung und in der Schlussphase ist diese stärker gedämpft. In diesem Zusammenhang ist auch zu berücksichtigen, dass die Wirksamkeit der Gewichtskraft bei der Absenkbewegung zunimmt. Wegen des Gewichts der Garniturteile ist dabei die Einstellbarkeit (vgl. unten) besonders relevant.

Bei der Anhebebewegung wird vor allem der letzte Teil stark gedämpft, wie gerade beschrieben, um das Anschlagen insbesondere des Toilettendeckels 2 an der Wand oder einem Spülkasten möglichst sanft zu gestalten. Hier ist dann nämlich auch kein Elastomerpuffer mehr vorgesehen, wie ihn ausweislich Figur 1 der Toilettendeckel 2 zum Anschlag auf dem Toilettensitz 3 am Ende der Absenkbewegung trägt (und analog der Toilettensitz 3 an seiner Unterseite zum Anschlag auf den Toilettenkörper 1).

Bei der obigen Erläuterung wurde entgegen den Abbildungen 3-9 eine Konstanz der Verhältnisse zwischen dem ersten Dämpferelement 13 und dem Einstellelement 12 vorausgesetzt, was dem tatsächlichen Betrieb auch entspricht. Das Einstellelement 12 ist nämlich durch einen in Figur 2 gut erkennbaren stirnseitigen Eingriff für ein Werkzeug und eine entsprechende Öffnung in der Stirnseite des ersten Dämpferelements 13 relativ zu diesem drehbar. Diese Drehbarkeit ist durch die Anlageflächen dazwischen und vor allem den Dichtungsring 11 etwas schwergängig, sodass ohne Werkzeugeingriff keine Verstellung erfolgt.

Im Vergleich der Figuren 3-9, insbesondere 5-8, ist aber das Einstellelement 12 relativ zu dem ersten Dämpferelement 13 in verschiedenen Positionen gezeigt. Das ergibt sich einfach daraus, dass das Einstellelement 12 in den Figuren immer in der gleichen Schnittebene dargestellt ist und die Elemente 5-8 auch, wohingegen das erste Dämpferelement 13 gemäß den obigen Schilderungen gedreht wird.

Vergleicht man die relative Positionierung der Kante 26 links am Ende des Raums relativ zu dem Einstellelement 12 und insbesondere der Vertiefung 27 darin zwischen den Figuren 5-8, so erkennt man, dass diese Kante 26 von Figur 5 zu Figur 8 schrittweise nach links bzw. umgekehrt wandert. Dementsprechend kann also mit einer analogen Drehung des Einstellelements 12 relativ zu dem ersten Dämpferelement 13 die axiale Überlappung zwischen dem Raum und der Vertiefung 27 verstellt werden zwischen praktisch vollständig in Figur 8 und sehr gering in Figur 5. Dementsprechend verändert sich der Strömungswiderstand dieser Stelle, was bei der Absenkbewegung in deren Schlussphase entscheidend wird. Dann ist nämlich im Unterschied zur Anhebebewegung das Ventil in Form des Ventilkörpers 10 in seinem Sitz geschlossen und muss das Dämpfungsmedium damit durch diese Engstelle passieren.

Hierbei ist das Einstellelement 12 ausschließlich drehbar, also nicht wie bei einer Schraubenbewegung gleichzeitig axial veränderlich. Insbesondere ist es verliersicher aus dem beschriebenen Grund und infolge seiner aus den Figuren erkennbaren Steckmontage von innen.

Die Einstellöffnung wiederum ist ersichtlich die durch die Vertiefung 27 gebildete Öffnung in der ansonsten zylindrischen Außenfläche in diesem rechten Abschnitt des Einstellelements 12. Sie überlappt drehwinkelabhängig mehr oder weniger mit der Stufe am linken Ende des Raums 26, die dementsprechend eine helixförmige Abdeckkante bildet.

Schließlich weist das Einstellelement 12 in Form der trichterförmigen Verbreiterung 18 des radial nach innen führenden Kanals darunter eine Vorratskammer für Dämpfungsmedium auf, die die eingangs beschriebenen vorteilhaften Wirkungen hat und (bei dem hinsichtlich der einstellbaren Dämpfungswirkung relevanten Bewegungssinn) der Einstellöffnung unmittelbar nachfolgt.

Die Vertiefung 27 erkennt man besonders deutlich in der Figur 10 rechts oben, in der das Einstellelement 12 isoliert dargestellt ist. Figur 11 mit einem isoliert dargestellten Achsteil 7 zeigt, dass es ähnliche Vertiefungen im Anschluss an die Durchtrittsöffnungen 22 und 25 gibt. Auch dort dienen sie der Verfeinerung der Einstellungsmöglichkeiten bei schon stark verringertem Strömungsquerschnitt.

Die erfindungsgemäße Einstellbarkeit der Dämpfung ist nicht nur besonders einfach und robust sowie sicher gelöst. Sie kann zusätzlich auch besonders genau und über einen breiten Bereich eingestellt werden. Erfindungsgemäß kann damit eine weitreichende Anpassung an unterschiedliche Dämpfungsaufgaben, z. B. unterschiedliche Gewichte der Garniturteile 2 und 3, erfolgen, wobei vorteilhafterweise eine kleinere Zahl unterschiedlicher Dämpfungsmedien oder sogar ein und dasselbe Dämpfungsmedium Verwendung finden können.

In diesem Zusammenhang gibt es auch produktionsseitig Anpassungsmöglichkeiten, nämlich durch kleine Eingriffe zur Veränderung der Form, insbesondere axiale Länge und radiale Tiefe, der verschiedenen Vertiefungen. Zum Beispiel können hier kleine Nachbearbeitungen an Spritzgusswerkzeugen oder anderen Teilen oder der Austausch entsprechender Teile von Spritzgusswerkzeugen benutzt werden.

## Patentansprüche

1. Dämpfer für eine Drehbewegung, insbesondere von Toilettendeckeln (2) oder -sitzen (3), um eine Drehachse, mit
einem Gehäuse (5),
einem viskosen Dämpfungsmedium in dem Gehäuse (5),
einem ersten Dämpferelement (13), welches einen ersten Teil in dem Gehäuse (5) und einen mit dem ersten Teil im Rotationssinn fest verbundenen zweiten Teil außerhalb des Gehäuses (5) aufweist und mit dem ersten und dem zweiten Teil relativ zu dem Gehäuse (5) um die Drehachse drehbar ist,
einem zweiten Dämpferelement (8), welches bezüglich Drehungen um die Drehachse fest mit dem Gehäuse (5) gekoppelt und mit dem ersten Dämpferelement (13) so gekoppelt ist,
dass eine Drehung des ersten Dämpferelements (13) relativ zu dem Gehäuse (5) zu einer axialen Verschiebung des zweiten Dämpferelements (8) relativ zu dem ersten Dämpferelement (13) und einer Verdrängung des Dämpfungsmediums in dem Gehäuse (5) durch das zweite Dämpferelement (8) führt,
**dadurch gekennzeichnet, dass** das zweite Dämpferelement (8) mittels eines Gewindeeingriffs mit dem ersten Dämpferelement (13) gekoppelt und zumindest insoweit radial in dem ersten Dämpferelement (13) aufgenommen ist, dass der Gewindeeingriff in dem ersten Dämpferelement (13) vorliegt, und
dass der Gewindeeingriff und die dadurch bewirkte Verdrängung des Dämpfungsmediums durch das zweite Dämpferelement (8) bidirektional wirken.

2. Dämpfer nach Anspruch 1, bei dem ein für den Gewindeeingriff vorgesehenes Formelement (9) des zweiten Dämpferelements (8) und ein für den Gewindeeingriff vorgesehenes Formelement (17) des ersten Dämpferelements (13) jeweils Gewindeabschnitte sind, die miteinander in Eingriff stehen.

3. Dämpfer nach Anspruch 1 oder 2, bei dem das zweite Dämpferelement (8) zumindest bei einem Teil seiner hinsichtlich seiner axialen Verschiebung möglichen Positionen vollständig radial in dem ersten Dämpferelement (13) aufgenommen ist.

4. Dämpfer nach Anspruch 2, auch in Kombination mit Anspruch 3, bei dem die Gewindeabschnitte (9, 17) jeweils einen Drehwinkel von mindestens 50° um die Drehachse abdecken.

5. Dämpfer nach einem der vorstehenden Ansprüche mit einem Einstellelement (12), das von außerhalb des Dämpfers zugänglich und zur Veränderung eines Strömungsquerschnitts eines Teils eines Strömungsweges des Dämpfungsmediums bei seiner Verdrängung durch das zweite Dämpferelement (8) ausgelegt ist.

6. Dämpfer nach Anspruch 5, bei dem das Einstellelement (12) ein zentrischer axialer Stift in dem zweiten Teil des ersten Dämpferelements (13) ist und eine durch eine Drehung des Stifts verfahrbare Einstellöffnung mit radialer Durchströmungsrichtung zur Veränderung des Strömungsquerschnitts aufweist.

7. Dämpfer nach Anspruch 6, bei dem die Einstellöffnung in zumindest einem Teil eines Verfahrweges der Drehbarkeit mit einer Abdeckkante (26) überlappt, wobei das Ausmaß der Überlappung durch die Drehung verstellt und damit der Strömungsquerschnitt eingestellt wird.

8. Dämpfer nach Anspruch 6 oder 7, bei dem die Drehung des Einstellelements (12) keine axiale Komponente aufweist.

9. Dämpfer nach Anspruch 6, optional in Kombination mit Anspruch 7 oder 8, bei dem die verfahrbare Öffnung in einem Umkehrbereich des Strömungswegs des Dämpfungsmediums zwischen einem von dem Dämpfungsmedium eingenommenen und durch die Verschiebung des zweiten Dämpferelements (8) veränderten Volumen (21) und einem axialen zentrischen Teil (23) des Strömungswegs zwischen diesem Volumen (21) und einem gegenläufig zu diesem Volumen (21) durch die Verschiebung des zweiten Dämpferelements (8) veränderten und von dem Dämpfungsmedium eingenommenen Volumen (20) ist, wobei die beiden veränderten Volumina (20, 21) axial beidseits des zweiten Dämpferelements (8) liegen.

10. Dämpfer nach einem der vorstehenden Ansprüche mit einem in einem Strömungsweg des Dämpfungsmediums vorgesehenen Ventilelement (10), das strömungsrichtungsabhängig von dem Dämpfungsmedium zwischen zwei Positionen hin und her bewegt werden kann und in einer ersten der Positionen eine zur Verringerung des Gesamtströmungswiderstands des Dämpfungsmediums vorgesehene Bypassöffnung in einer der Strömungsrichtungen des Dämpfungsmediums verschließt oder verengt und in der anderen Position nicht.

11. Dämpfer nach Anspruch 5 und Anspruch 10, bei dem die Bypassöffnung im offenen Zustand hinsichtlich der Strömung des Dämpfungsmediums zu der Einstellöffnung des Einstellelements (12) parallel geschaltet ist.

12. Dämpfer nach einem der vorstehenden Ansprüche, bei dem das zweite Dämpferelement (8) in einem Endbereich seiner axialen Verschiebung eine Durchtrittsöffnung (22, 25) für das Dämpfungsmedium durch Überlappung mit der Durchtrittsöffnung (22, 25) verengt oder verschließt und damit für eine stärkere Dämpfung in diesem Endbereich sorgt.

13. Dämpfer nach Anspruch 9 und Anspruch 12, bei dem die Durchtrittsöffnung (22, 25) an den axialen Teil (23) des Strömungswegs angrenzt.

14. Verwendung einer Mehrzahl vorzugsweise baugleicher Dämpfer nach Anspruch 6, auch in Kombination mit einem weiteren der vorstehenden Ansprüche, bei welcher die Dämpfer aus der Mehrzahl mit demselben Typ Dämpfungsmedium befüllt sind, für hinsichtlich der zu dämpfenden Kräfte unterschiedliche Einsatzzwecke, insbesondere für unterschiedlich schwere Toilettendeckel (2) oder -sitze (3).

15. Toilettengarnitur mit einem Toilettendeckel (2) und/oder einem Toilettensitz (3) zur Montage auf einer Toilette und mit mindestens einem Dämpfer nach einem der Ansprüche 1 bis 13.

## Claims

1. Damper for a rotary movement, in particular of toilet lids (2) or seats (3), about an axis of rotation, having
a housing (5),
a viscous damping medium in the housing (5),
a first damper element (13), which has a first part in the housing (5) and a second part, firmly connected to the first part in a rotational sense, outside the housing (5) and which is rotatable with the first and the second part relative to the housing (5) about the axis of rotation,
a second damper element (8), which is firmly coupled to the housing (5) with respect to rotations about the axis of rotation, and which is coupled to the first damper element (13) such
that a rotation of the first damper element (13) relative to the housing (5) leads to an axial displacement of the second damper element (8) relative to the first damper element (13) and a displacement of the damping medium in the housing (5) by the second damper element (8),
**characterized in that** the second damper element (8) is coupled to the first damper element (13) by means of a thread engagement and is received radially in the first damper element (13) at least to the extent that the thread engagement is present in the first damper element (13), and
that the thread engagement and the resulting displacement of the damping medium by the second damping element (8) have a bidirectional effect.

2. Damper according to claim 1, wherein a shaped element (9) of the second damper element (8) provided for the thread engagement and a shaped element (17) of the first damper element (13) provided for the thread engagement are each threaded portions which are in engagement with one another.

3. Damper according to claim 1 or 2, in which the second damper element (8) is accommodated completely radially in the first damper element (13) for at least some of its possible positions with respect to its axial displacement.

4. Damper according to claim 2, also in combination with claim 3, in which the threaded portions (9, 17) each cover an angle of rotation of at least 50° about the axis of rotation.

5. Damper according to one of the preceding claims with an adjusting element (12) which is accessible from outside the damper and is designed to change a flow cross-section of a part of a flow path of the damping medium in its displacement by the second damper element (8).

6. Damper according to claim 5, in which the adjusting element (12) is a central axial pin in the second part of the first damper element (13) and has an adjustment opening which can be moved by rotating the pin and has a radial flow direction for changing the flow cross-section.

7. Damper according to claim 6, in which the adjustment opening overlaps with a cover edge (26) in at least part of a travel path of the rotatability, the extent of the overlap being adjusted by the rotation and thus the flow cross-section being adjusted.

8. Damper according to claim 6 or 7, in which the rotation of the adjusting element (12) has no axial component.

9. Damper according to claim 6, optionally in combination with claim 7 or 8, in which the movable opening is in a reversal region of the flow path of the damping medium between a volume (21) occupied by the damping medium and changed by the displacement of the second damper element (8) and an axial centric part (23) of the flow path between this volume (21) and a volume (20) changed in the opposite sense to this volume (21) by the displacement of the second damper element (8) and occupied by the damping medium, wherein the two changed volumes (20, 21) lie axially on both sides of the second damper element (8).

10. Damper according to one of the preceding claims with a valve element (10) provided in a flow path of the damping medium, which can be moved back and forth between two positions depending on the flow direction by the damping medium and in one of the positions closes or narrows a bypass opening provided for reducing the overall flow resistance of the damping medium in one of the flow directions of the damping medium and not in the other position.

11. Damper according to claim 5 and claim 10, in which the bypass opening in the open state is connected in parallel to the adjustment opening of the adjusting element (12) with respect to the flow of the damping medium.

12. Damper according to one of the preceding claims, in which the second damper element (8) narrows or closes a passage opening (22, 25) for the damping medium in an end region of its axial displacement by overlapping with the passage opening (22, 25) and thus causes greater damping in this end region.

13. Damper according to claim 9 and claim 12, wherein the passage opening (22, 25) is adjacent to the axial part (23) of the flow path.

14. Use of a plurality of preferably structurally identical dampers according to claim 6, also in combination with another of the preceding claims, in which the dampers of the plurality are filled with the same type of damping medium, for different applications with regard to the forces to be damped, in particular for toilet lids (2) or seats (3) of different weights.

15. Toilet set with a toilet lid (2) and/or a toilet seat (3) for mounting on a toilet and with at least one damper according to one of claims 1 to 13.

## Revendications

1. Amortisseur de mouvement de rotation, notamment de couvercles (2) ou de sièges (3) de toilettes, autour d'un axe de rotation, comportant :
un boîtier (5),
un agent d'amortissement visqueux à l'intérieur du boîtier (5),
un premier élément amortisseur (13) qui présente une première partie située dans le boîtier (5) et une deuxième partie située à l'extérieur du boîtier (5) et reliée solidaire à la première partie dans le sens de rotation, et qui est apte à tourner sur l'axe de rotation, par ses première et deuxième parties, par rapport au boîtier (5),
un deuxième élément amortisseur (8) qui est couplé au boîtier (5) de façon solidaire par rapport aux rotations sur l'axe de rotation et qui est couplé au premier élément amortisseur (13) de telle façon que
une rotation du premier élément amortisseur (13) par rapport au boîtier (5) entraîne un déplacement axial du deuxième élément amortisseur (8) par rapport au premier élément amortisseur (13) ainsi qu'un refoulement de l'agent d'amortissement présent dans le boîtier (5) sous l'effet du deuxième élément amortisseur (8),
**caractérisé en ce que** le deuxième élément amortisseur (8) est couplé au premier élément amortisseur (13) par emboîtage fileté et est logé radialement dans le premier élément amortisseur (13) au moins tant que l'emboîtage fileté est présent dans le premier élément amortisseur (13), et
**en ce que** l'emboîtage fileté et le refoulement de l'agent d'amortissement qui en résulte à travers le deuxième élément amortisseur (8) ont une fonction bidirectionnelle.

2. Amortisseur selon la revendication 1, dans lequel un élément moulé (9) du deuxième élément amortisseur (8) prévu pour l'emboîtage fileté et un élément moulé (17) du premier élément amortisseur (13) prévu pour l'emboîtage fileté constituent chacun un tronçon fileté en emboîtage mutuel.

3. Amortisseur selon la revendication 1 ou 2, dans lequel le deuxième élément amortisseur (8) est logé complètement radialement dans le premier élément amortisseur (13), au moins pour une partie des positions qu'il peut adopter par rapport à son déplacement axial.

4. Amortisseur selon la revendication 2, également en combinaison avec la revendication 3, dans lequel les tronçons filetés (9, 17) couvrent chacun un angle de rotation d'au moins 50° autour de l'axe de rotation.

5. Amortisseur selon l'une des revendications précédentes, comportant un élément de réglage (12) accessible depuis l'extérieur de l'amortisseur et conçu pour modifier la section d'écoulement d'une partie d'un trajet d'écoulement de l'agent d'amortissement lors de son refoulement sous l'effet du deuxième élément amortisseur (8).

6. Amortisseur selon la revendication 5, dans lequel l'élément de réglage (12) est une tige axiale centrale située dans la deuxième partie du premier élément amortisseur (13) et présente une ouverture de réglage à sens d'écoulement radial qui peut être déplacée par rotation de la tige pour modifier la section d'écoulement.

7. Amortisseur selon la revendication 6, dans lequel l'ouverture de réglage chevauche un bord de couverture (26) dans au moins une partie d'un trajet de déplacement de mise en rotation, ladite rotation permettant de régler l'étendue du chevauchement et ainsi de régler la section d'écoulement.

8. Amortisseur selon la revendication 6 ou 7, dans lequel la rotation de l'élément de réglage (12) n'a aucune composante axiale.

9. Amortisseur selon la revendication 6, éventuellement en combinaison avec la revendication 7 ou 8, dans lequel l'ouverture déplaçable se trouve dans une région d'inversion du trajet d'écoulement de l'agent d'amortissement, entre un volume (21) occupé par l'agent d'amortissement et modifié par le déplacement du deuxième élément amortisseur (8) et une partie centrale axiale (23) du trajet d'écoulement située entre ce volume (21) et un volume (20) qui est modifié en sens inverse de ce volume (21) sous l'effet du déplacement du deuxième élément amortisseur (8) et qui est occupé par l'agent d'amortissement, les deux volumes (20, 21) modifiés étant situés axialement des deux côtés du deuxième élément amortisseur (8).

10. Amortisseur selon l'une des revendications précédentes, comportant un élément de vanne (10) prévu dans un trajet d'écoulement de l'agent d'amortissement et susceptible d'être déplacé d'avant en arrière entre deux positions en fonction du sens d'écoulement de l'agent d'amortissement et qui, dans une position, ferme ou resserre une ouverture de dérivation prévue pour réduire la résistance totale à l'écoulement de l'agent d'amortissement dans l'une des directions d'écoulement dudit agent d'amortissement, mais pas dans l'autre position.

11. Amortisseur selon la revendication 5 et la revendication 10, dans lequel, à l'état ouvert, l'ouverture de dérivation est reliée en parallèle à l'ouverture de réglage de l'élément de réglage (12) eu égard à l'écoulement de l'agent d'amortissement.

12. Amortisseur selon l'une des revendications précédentes, dans lequel le deuxième élément amortisseur (8) resserre ou ferme une ouverture de passage (22, 25) destinée à l'agent d'amortissement dans une zone d'extrémité de son déplacement axial en chevauchant ladite ouverture de passage (22, 25) et assure ainsi un amortissement plus fort dans cette zone d'extrémité.

13. Amortisseur selon la revendication 9 et la revendication 12, dans lequel l'ouverture de passage (22, 25) jouxte la partie axiale (23) du trajet d'écoulement.

14. Utilisation d'une pluralité d'amortisseurs de préférence identiques selon la revendication 6, également en combinaison avec une autre des revendications précédentes, dans laquelle les amortisseurs de ladite pluralité sont remplis du même type d'agent d'amortissement servant à des applications différentes en ce qui concerne les forces à amortir, notamment pour des couvercles (2) ou des sièges (3) de toilettes de poids différents.

15. Abattant de toilettes comportant un couvercle de toilettes (2) et/ou un siège de toilettes (3) à monter sur des toilettes et comportant au moins un amortisseur selon l'une des revendications 1 à 13.
